(19) **Europäisches Patentamt / European Patent Office / Office européen des brevets**

(11) **EP 4 672 027 A1**

(12) # EUROPEAN PATENT APPLICATION

(43) Date of publication:
**31.12.2025   Bulletin 2026/01**

(21) Application number: **25185168.9**

(22) Date of filing: **25.06.2025**

(51) International Patent Classification (IPC):
**G06F 16/3329** (2025.01)

(52) Cooperative Patent Classification (CPC):
**G06F 16/33295**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority:  **28.06.2024   US 202418759532**

(71) Applicant: **Microsoft Technology Licensing, LLC Redmond, WA 98052-6399 (US)**

(72) Inventors:
• **Boué, Laurent**
  **Redmond, WA, 98052 (US)**
• **Bokobza, Yasmin**
  **Redmond, WA, 98052 (US)**
• **Rama, Kiran**
  **Redmond, WA, 98052 (US)**
• **Panwar, Naveen**
  **Redmond, WA, 98052 (US)**

(74) Representative: **Grünecker Patent- und Rechtsanwälte PartG mbB Leopoldstraße 4 80802 München (DE)**

(54) **SYSTEM AND METHOD FOR GENERATING QUERY VARIATIONS FOR RETRIEVAL AUGMENTED GENERATION (RAG) SYSTEMS**

(57)    A method, computer program product, and computing system for processing a plurality of query-answer pairs associated with a generative artificial intelligence (AI) model. A first set of query variations are generated from the plurality of query-answer pairs using a genetic algorithm. A plurality of content portions associated with the first set of query variations are identified using a Retrieval Augmentation Generation (RAG) system. A fitness score associated with each of the query variations of the first set of query variations is determined using the plurality of content portions. A plurality of query variation-answer pairs are generated by generating a second set of query variations from the first set of query variations using the genetic algorithm and the fitness scores associated with each of the first set of query variations.

FIG. 1

EP 4 672 027 A1

**Description**

*Background*

With the prevalence of generative artificial intelligence (AI) models, such as large language models (LLMs), question/answering (QA) systems are now powering many applications across various business environments. In some instances, a query that a user provides is given as input to the LLM, along an appropriate context, which is the text that the LLM should "search" for in an answer, a technique that is called prompt engineering. The main problem with this approach is that the size of the prompt is limited. For example, the limit for GPT3.5-Turbo is 4,096 tokens, the limit for GPT4 is 8,192 tokens, and the limit for GPT-4-32k is 32,768 tokens. Documents or other content that can be searched using the LLM are often orders of magnitude larger than the prompt size limit. For example, the size of a single document could be twenty megabytes, and the size of the complete set of relevant documents and knowledge base articles ranges between hundreds of megabytes to hundreds of gigabytes. Accordingly, a Retrieval Augmented Generation (RAG) system is used to break input documents into content portions that are small enough to fit the prompt size limitations. It then uses common indexing and retrieval techniques to match user queries to the most relevant content portions, and then combines the user query and context (one or more content portions) as a prompt to the LLM and presents the answers to the user.

However, obtaining labeled data for training or evaluating the performance of RAG system presents a significant obstacle to deploying and maintaining RAG systems. In the absence of labelled data, evaluation metrics are limited to post-implementation as opposed to being part of the modelling stage. Further, such approaches rely on metrics like survey and user feedback as opposed to machine learning-type metrics such as accuracy, precision, recall, etc. Labelling involves significant manual effort looking at past data and involving crowdsourcing (i.e., a set of human experts assigning labels to the data). Labelling is an expensive exercise both in terms of actual financial cost as well as in processing time.

*Brief Description of the Drawings*

FIG. 1 is a flow chart of an implementation of a query variation generation process;

FIG. 2 is a diagrammatic view of a RAG system implementation; and

FIG. 3 is a diagrammatic view of the query variation generation process of FIG. 1; and

FIG. 4 is a diagrammatic view of computer system and the query variation generation process coupled to a distributed computing network.

Like reference symbols in the various drawings indicate like elements.

*Detailed Description of the Embodiments*

Implementations of the present disclosure generate query variation-answer pairs as labelled data using a genetic algorithm (i.e., a search heuristic that finds initial approximate solutions that are iteratively optimized given a particular constraint or set of constraints) and user feedback concerning the query-answer pairs. For example, the query variation generation process addresses the challenges associated with generating diverse and relevant question-answer pairs within the RAG system framework. Leveraging pre-existing evaluation metrics of the RAG system and a limited number of query-answer pairs, query variation generation process uses a genetic algorithm-driven generation of query variations and user feedback integration to provide numerous, diverse examples of query-answer pairs while also ensuring continual refinement and optimization of the RAG system's capabilities, ultimately leading to improved performance (i.e., more targeted content portion retrieval with reduced token expense) and user satisfaction (with queries addressed from the retrieved content portions).

In some implementations, query variation generation process supplements a conventional RAG system framework by processing content portions retrieved for previous queries of a query-answer pair and generates query variations using a genetic algorithm. Leveraging the user's original query as input, the genetic algorithm employs genetic operators (e.g., selection, crossover, and/or mutation) to create a range of query variations. These query variations, which involve altering keywords, rephrasing, and/or restructuring the original query, produce diverse yet related queries capturing different nuances or perspectives.

The genetic algorithm integrates user feedback on existing answers into a fitness function (i.e., a measure of how well a particular query variation optimizes user feedback and selection of particular content portions) to guide the generation of query variations. For example, the feedback serves as an input for assessing the relevance and quality of the generated query variations. The user feedback is available for a portion of the previous queries, and query variation generation process incorporates this user feedback for most of the query-answer pairs. Each generated query variation is used to generate answers by providing them as input to the generative AI model. The retrieved content portions serve as the context for the generative AI model to generate answers tailored to the new queries. The additional query-answer pairs are used during training resulting in a more focused RAG system. These query-answer pairs can also be used for quickly retrieving answers from a semantic cache when there is a match to similar query variations generated by the genetic algorithm.

The details of one or more implementations are set forth in the accompanying drawings and the description below. Other features and advantages will become apparent from the description, the drawings, and the claims.

***The Query Variation Generation Process:***

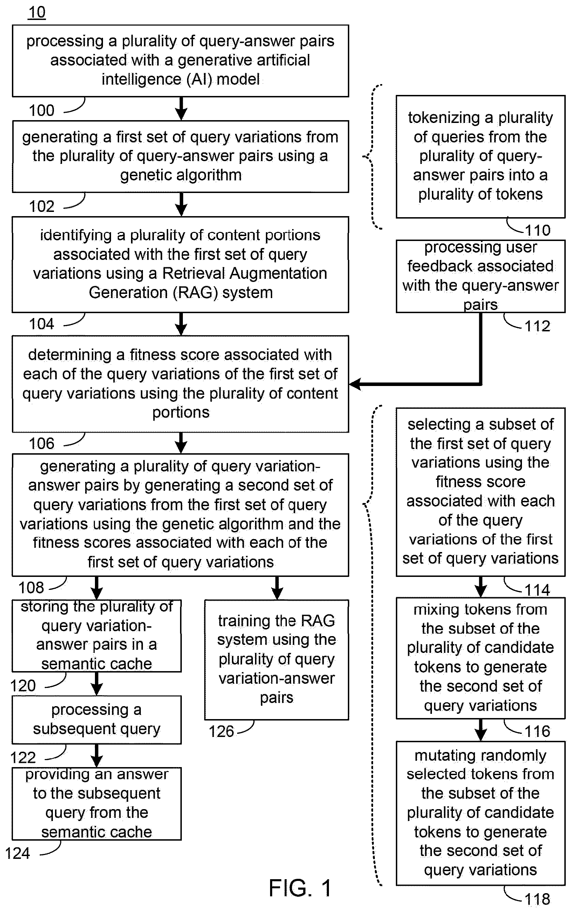

Referring to FIGS. 1-3, query variation generation process 10 processing 100 a plurality of query-answer pairs associated with a generative artificial intelligence (AI) model. A first set of query variations are generated 102 from the plurality of query-answer pairs using a genetic algorithm. A plurality of content portions associated with the first set of query variations are identified 104 using a Retrieval Augmentation Generation (RAG) system. A fitness score associated with each of the query variations of the first set of query variations is determined 106 using the plurality of content portions. A plurality of query variation-answer pairs are generated 108 by generating a second set of query variations from the first set of query variations using the genetic algorithm and the fitness scores associated with each of the first set of query variations.

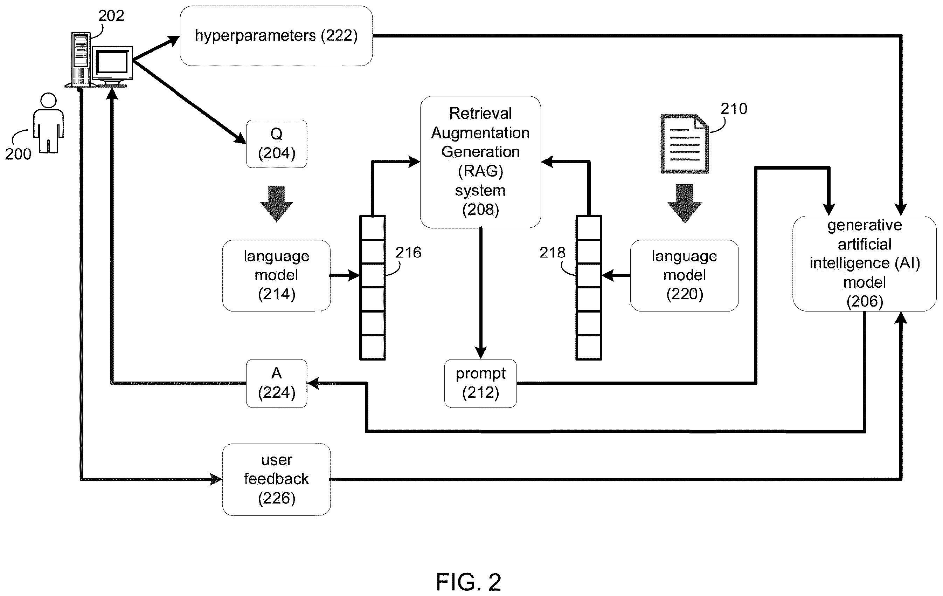

In some implementations, query variation generation process 10 processes 100 a plurality of query-answer pairs associated with a generative artificial intelligence (AI) model. Referring also to FIG. 2, one example of the use of a Retrieval Augmented Generation (RAG) system with a generative artificial intelligence (AI) model is shown. For example, a user (e.g., user 200) may use a computing device (e.g., computing device 202) to process a query (e.g., query 204) using a generative AI model. Query 204 is a request from a user for information from a document or a plurality of documents. In one example, query 204 may include a text string in the form of a request or a question. In another example, query 204 may be initially received as a recorded audio request from a user that is converted into a machine-readable version of the audio signal and/or converted to text (e.g., using an automated speech recognition system). A generative AI model (e.g., generative AI model 206) is an algorithm and/or system that processes natural language prompts and/or example entries and/or contextual information concerning an incident to generate a response. In some implementations, generative AI model 200 includes a Large Language Model (LLM). A LLM is a language model consisting of a neural network with many parameters (typically billions of weights or more), trained on large quantities of unlabeled text using self-supervised learning or semi-supervised learning. Though trained on simple tasks along the lines of predicting the next word in a sentence, LLMs with sufficient training and parameter counts capture the syntax and semantics of human language or specific patterns.

In some implementations, hyperparameter generation process 10 processes the query using a Retrieval Augmented Generation (RAG) system. For example and as discussed above, a RAG system (e.g., RAG system 208) is a system that is used to break relevant input documents into content portions that are small enough to fit prompt size limitations associated with a generative AI model for processing queries upon. Many generative AI models, such as LLMs, are not trained on a particular library of input documents used for a particular scenario. As such, these generative AI models lack the context to process content from the particular library of input documents. Accordingly, RAG system 208 breaks content into chunks or portions (e.g., content portion 210) that are small enough to fit prompt size limitations associated with generative AI model 206. Common indexing and retrieval techniques match user queries to the most relevant content portions, and the user query and context (one or more content portions) are combined as a prompt (e.g., prompt 212) to generative AI model 206.

In some implementations, language model 214 generates a query embedding (e.g., query embedding 216) from query 204. For example, given a user query (e.g., query 204), the query text is transformed into a vector of embeddings (e.g., query embedding 216) by passing each query 204 through a language model (e.g., language model 214) to generate a vector of numbers corresponding to the dimensions for the vector embedding (e.g., query embedding 216). In some implementations, language model 214 converts text into a numerical representation. For example, query embedding 216 is a numerical representation of the semantic meaning of query 204 and allows query 204 to be understood and processed more effectively when comparing against content portion embeddings of an input content portion or other document (e.g., content portion 210). Similarly, RAG system 208 generates a content portion embedding (e.g., content portion embedding 218) from content portion 212 using a language model (e.g., language model 220). In one example, language model 220 is the same as language model 214. In another example, separate language models are used for query processing and content processing.

In some implementations, RAG system 208 identifies a plurality of content portions for inclusion in prompt 212 with query 204 using a content portion similarity score. A content portion similarity score is a numerical representation of the similarity between a content portion embedding and a query embedding. For example, hyperparameter generation process 10 determines or generates a content portion similarity score to each candidate content portion based on of how well it matches a given query. The score is based on the similarity, or distance, between the vector embeddings of the content portion and query. It will be appreciated that any distance metric can be used within the scope of the present disclosure. In one example, hyperparameter generation process 10 determines the content portion similarity score using cosine similarity. Cosine similarity scoring assigns a score in the range of [-1,1], where a score close to "1" means the two vectors are similar (codirectional), a score close to "-1" means the two vectors are opposite, and a score close to "0" means the two vectors are unrelated (orthogonal). In some implementations, hyperparameter generation process 10 limits the score to the range of [0,1] and ignore content portions that have a negative cosine similarity with the query.

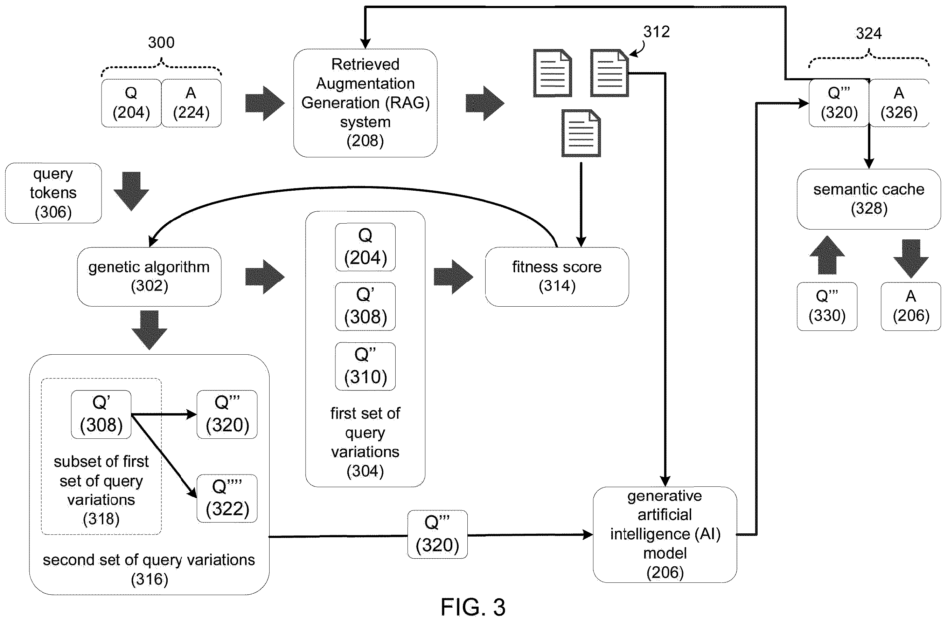

In some implementations, RAG system 208 generates a prompt (e.g., prompt 212) using query embedding 216 and the content portion embedding 218 and provides this to generative AI model 206. Using prompt 212 and hyperparameters 222 defined for generative AI model 206 and/or for query 204, generative AI model 206 generates answer 224 as an "answer" to query 204. In some implementations, hyperparameter generation process 10 receives user feedback (e.g., user feedback 226) from user 200 as a measure of the user's satisfaction with answer 224 for query 204. Referring also to FIG. 3, the combination of query 204 and answer 224 defines a query-answer pair (e.g., query-answer pair 300).

In some implementations, query variation generation process 10 generates 102 a first set of query variations from the plurality of query-answer pairs using a genetic algorithm. A genetic algorithm (GA) (e.g., genetic algorithm 302) is a search heuristic inspired by the process of natural selection, which is part of the larger class of evolutionary algorithms. It is used to find approximate solutions to optimization and search problems. In a genetic algorithm, a population of candidate solutions is evolved over time. Each candidate solution encodes a solution to the problem, often represented as a string of bits, characters, or numbers. The algorithm begins with an initial population generated randomly or heuristically. Each candidate solution's fitness is evaluated using a fitness function that measures how well it solves the problem.

The next step is selection, where pairs of parent solutions are chosen based on their fitness scores, with higher fitness scores having a higher chance of selection. These parents undergo crossover, a process that combines parts of their chromosomes to produce offspring, mimicking biological reproduction. Mutation is then applied to the offspring with a certain probability, introducing random changes to individual genes to maintain genetic diversity and explore new solution spaces. A new population is formed by replacing some or all of the old population with the offspring, often using strategies like elitism to preserve the best solutions.

This iterative process of evaluation, selection, crossover, mutation, and replacement continues until a termination condition is met, such as a predefined number of generations, a satisfactory fitness level, or a lack of improvement over several generations. The best solution found during this process is then output by the algorithm. Through this evolutionary approach, genetic algorithms can effectively search for optimal or near-optimal solutions in complex problem spaces.

Accordingly, query variation generation process 10 generates 102 a first set of query variations (e.g., first set of query variations 304) that represent an initial population. In some implementations, generating 102 the first set of query variations includes tokenizing 110 a plurality of queries from the plurality of query-answer pairs into a plurality of tokens. For example, before genetic algorithm 302 can generate variations of the user's query (e.g., query 204), the original query is tokenized 110 into a sequence of tokens (e.g., query tokens 306). Tokenization involves breaking down the query into its constituent tokens, such as words, subwords, or characters, depending on the chosen tokenization strategy. Tokenization directly affects how query variations are created because each tokenized element forms the basis for generating variations. For example, let "Q" represent the original query (e.g., query 204), which is tokenized into a sequence of tokens denoted as {t1, t2,..., tn} (e.g., query tokens 306). Suppose that the original query is: "What are the terms of use for XYZ software?". In this example, query variation generation process 10 tokenizes 110 query 204 into tokens set: {"What","are","the", "terms", "of", "use", "for", "XYZ" "software","?"'}. This tokenization allows the generation of an initial population of individuals, where each individual represents a potential variation of the original query. These variations serve as the starting point for the genetic algorithm's evolutionary process. For example, let $P=\{p_1,p_2,...,p_N\}$ represent the initial population, where "N" is the population size. Each individual $p_i$ is a sequence of tokens representing the "i"-th query variation. Suppose a population "P" comprises "N" query variations, where each variation is generated based on tokenization and potentially token weighting techniques to the original query. In some implementations, these N query variations are not "all possible variations" but are subject to pre-defined constraints.

As shown in FIG. 3, query variation generation process 10 generates 102 first set of query variations 304 by tokenizing 110 query 204 and generating a plurality of query variations (e.g., query variations 308, 310 - shown in FIG. 3 as "Q'" and "Q''") by varying one or more of query tokens 306 with tokens selected from a database of comparable tokens. In one example, the tokens of query variations 308, 310 are randomly selected. In another example, the tokens of query variations 308, 310 are randomly selected from a set of proximate or synonymous tokens from a token database. In this example, synonymous tokens are selected for inclusion in query variations 308, 310 of first set of query variations 304.

In some implementations, query variation generation process 10 generates query variations for a dataset of query-answer pairs. For each query-answer pair (represented as tuple $(q_i, a_i)$), query variation generation process 10 generates query variations of $q_i$ that preserve the semantics of queries while introducing syntactic/grammatical variations in the formulation of the query. In some implementations, query variation generation process 10 uses existing approaches for generating semantically related queries. In one example, query variation generation process 10 uses a language model (not shown) to process query 204 and generate variations of query 204 by encoding words into a dense vector representation in a continuous vector space, wherein similar words are closer together and are used to generate synthetic variations. In another example, query variation generation process 10 uses Siamese networks (i.e., neural networks trained to compare two input sequences to determine their similarity) to generate variations. In another example, query variation generation process 10 uses a semantic hashing model (i.e., a model that maps queries to binary codes in a manner that preserves semantic similarity, allowing for semantically similar synthetic variations of the input query) to generate variations.

In some implementations, query variation generation process 10 identifies 104 a plurality of content portions associated with the first set of query variations using a Retrieval Augmentation Generation (RAG) system. For example and as discussed above, during processing of query 204, query variation generation process 10 identifies 104 a plurality of content portions that are similar (e.g., cosine-similarity based on embedding-wise comparison of the query embedding and the content portion embeddings, or other comparison approaches) to query 204 and provides these for generating prompt 212. In this example, query variation generation process 10 identifies 104 content portions 310 for query variations 308, 310 for use in determining the fitness of query variations when generating the fitness score for each query variation of first set of query variations 304.

In some implementations, query variation generation process 10 determines 106 a fitness score associated with each of the query variations of the first set of query variations using the plurality of content portions. For example, the fitness of each individual query variation (e.g., query variations 308, 310) (also represented as $p_i$ (variation of the original query $q_i$)) is evaluated based on its ability to retrieve relevant information. This involves passing the tokenized query (e.g., query 204 and query variations 308, 310) through RAG system 208 to retrieve content portions (e.g., content portions 312) and to assess the quality of the answers generated. In one example, the fitness function is shown below in Equation 1:

$$f(p_i) = w1 \times \text{Domain Relevance} + w2 \times \text{Semantic Coherence} + w3 \times \text{Similarity} - wf \times (1 - f_i), \text{ where: w1, w2 , w3, wf represent the weights assigned to each component, respectively.} \tag{1}$$

Accordingly, given a population of individuals (i.e., variations of the original query $q_i$) generated by the GA, the fitness of each individual pi is evaluated to determine a fitness score (e.g., fitness score 314) using the fitness function $f(p_i)$ of Equation 1. The fitness score determined for each query variation reflects how well it retrieves relevant information compared to other individuals in the population. Higher fitness scores indicate better performance in terms of relevance retrieval. As shown above in Equation 1, determining the fitness score (e.g., fitness score 314) includes determining a domain relevance score, a semantic coherence score, and a similarity score.

In some implementations, query variation generation process 10 determines 106 fitness score by determining a domain relevance score. Domain relevance assesses how well the retrieved information aligns with the domain or topic of interest. In one example, query variation generation process 10 determines domain relevance score by determining the precision of the retrieved content portions from RAG system 208 for each query variation as shown in Equation 2:

$$(2) \qquad Precision = \frac{Number\ of\ Relevant\ Content\ Portions}{Total\ Number\ of\ Retrieved\ Content\ Portions}$$

In Equation 2, the number of relevant content portions is a number of content portions with a similar topic or domain as the original query and the total number of retrieved content portions includes the number of content portions 312 retrieved by RAG system 208 for the respective query variation. For example, query variation generation process 10 determines (e.g., using a language model) or is provided with the topic for the original query from which a respective query variation is generated and determines or is provided with the topic for the content portions to determine their similarity. In some implementations, a relevant content portion is identified if the topic of the content portions retrieved for the respective query variation is within a similarity threshold as the original query. In one example, the similarity threshold is a predefined value. In another example, the similarity threshold is defined per topic or per query.

In some implementations, query variation generation process 10 determines 106 fitness score by determining a semantic coherence score. Semantic coherence evaluates the logical coherence and consistency of the retrieved content portions relative to the original query. In one example, the semantic coherence can be measured as a cosine similarity of embeddings. For example, let $embedding_q$ represents the embedding of the original query Q, and let $embedding_d$ represents the embedding of the retrieved content portions. Accordingly, the cosine similarity is calculated as shown in Equation 3:

$$(3) \qquad Cosine\ Similarity = \frac{embedding_q \cdot embedding_d}{||embedding_q|| \times ||embedding_d||}$$

In some implementations, query variation generation process 10 determines 106 fitness score by determining a similarity score. For example, the similarity score measures how closely the generated query variations resemble the original query or other query variations. In one example, query variation generation process 10 determines a similarity score by determining a Jaccard Similarity of token sets. For example, let Q represent the original query, and Q' represent the generated query variant. The Jaccard Similarity is calculated as shown below in Equation 4:

$$(4) \qquad Jaccard\ Similarity = \frac{|Q \cap Q'|}{|Q \cup Q'|}$$

In one example, suppose the original query (e.g., query 204) is: "What are the terms for XYZ software?" and a first query variation (e.g., query variation 308) is "What are the conditions for using XYZ software?". In this example, query variation generation process 10 determines the similarity score by determining the Jaccard Similarity by tokenizing the original query (e.g., query 204) and the query variation (e.g., query variation 308) as {"What","are","the", "terms", "of","use","for","XYZ" "software"} for query 204 and {"What", "are", "the", "conditions", "for", "using", "XYZ", "software"} for query variation 308. The Jaccard Similarity is calculated in Equation 5:

$$(5) \qquad Jaccard\ Similarity = \frac{|Q\ Tokens \cap Q'\ Tokens\ |}{|Q\ Tokens \cup Q'\ Tokens\ |} = \frac{6}{10} = 0.6$$

In some implementations, determining 106 the fitness score associated with each of the first set of query variations includes processing 112 user feedback associated with the query-answer pairs. For example, the user feedback for the answer $A_i$ to the original query $Q_i$ is denoted as $f_i$, where $f_i = 1$ for positive feedback, and $f_i = 0$ for negative feedback and $w_f$ represents the weight assigned to user feedback in the fitness function. This weight determines the extent to which user feedback influences the fitness score. Positive user feedback increases the fitness score, while negative feedback decreases it, reflecting the impact of user preferences on the evaluation of query variations.

In some implementations, the user feedback (as measured by telemetry metrics like 'thumbs-up') is not available for all the queries. Accordingly, query variation generation process 10 divides the questions into two sets: a first set for those that have telemetry metrics, and a second set for those that do not have telemetry metrics. For those in the first set, query variation generation process 10 takes the average feedback for the query including a damping factor (e.g., 5/10 = 50/100 in terms of value). Accordingly, the average is not plain average, but rather a damped average as shown in Equation 6:

$$(6) \qquad Damped\ average\ feedback = sum(feedback)\ /\ (\alpha + count(feedback)),$$

where alpha is the damping factor.

For those in the second set, query variation generation process 10 generates a machine learning model to predict the user feedback given the tokens in the first set. Using the above machine learning model, query variation generation process 10 predicts user feedback for the queries that did not have user feedback. In this manner, query variation generation process 10 is able to have user feedback for every query-answer pair in the dataset.

In some implementations, each query variation's fitness score is determined using the fitness function, considering both its ability to retrieve relevant content portions and its alignment with user preferences. As will be discussed in greater detail below, during the selection stage of genetic algorithm 302, query variations that exhibit higher fitness scores, indicating better relevance retrieval and user satisfaction, are favored for further evolution. This approach enables the training and evaluation of the RAG system 208 based on high-quality query-answer pairs. For example, assuming positive feedback for original answer (e.g., answer 224) and considering the above examples for fitness score 314, query variation generation process 10 incorporates them into the Fitness Function calculation as shown below in Equation 7 (assuming that weights are assigned as follows: w1 = w2 = w3 = 1 ,wf = 0.3) with a domain relevance score of 0.75, a semantic coherence score of 0.85 and a similarity score of 0.60 to yield:

$$(7) \qquad (Q') = 1 \times 0.75 + 1 \times 0.85 + 1 \times 0.60 - 0.3 \times 0 = 2.20$$

In some implementations, query variation generation process 10 generates 108 a plurality of query variation-answer pairs by generating a second set of query variations from the first set of query variations using the genetic algorithm and the fitness scores associated with each of the first set of query variations. For example, using fitness score 314, query variation generation process 10 uses genetic algorithm 302 to generate a second set of query variations (e.g., second set of query variations 316) that are further evolutions or optimizations of first set of query variations 304. In some implementations, query variation generation process 10 generates a plurality of query variation-answer pairs by defining the conditions under which genetic algorithm 302 stops iterating and returns a final result. In one example, query variation generation process 10 stops iterating through generating sets of query variations and determining fitness scores until a threshold number of query variations are generated.

In some implementations, generating 108 the plurality of query variation-answer pairs includes selecting 114 a subset of the first set of query variations using the fitness score associated with each of the query variations of the first set of query variations. For example, using first set of query variations 304 as the initial population for genetic algorithm 302, query variation generation process 10 performs further optimizations by selecting a subset of query variations from the first set of query variations using the fitness score. For example, during selection, individual query variations from the population (i.e., first set of query variations 304) are evaluated based on their fitness score (e.g., fitness score 314), which involves processing tokenized queries to assess relevance and coherence. For example, the fitness score evaluation compares each query variation to the original query to determine relevance and coherence. The selection influences which query variations are retained or discarded based on their fitness score compared to the original query. For instance, query variations that are more closely related to the original query in terms of relevance and coherence are selected for further evolution. In some implementations, query variation generation process 10 compares fitness scores of original query 204 against the fitness scores of query variations 308, 310 relative to a threshold to select 114 the query variations for inclusion in subset of first set of query variations 318.

In some implementations, generating 108 the plurality of query variation-answer pairs includes mixing 116 tokens from the subset of the plurality of candidate tokens to generate the second set of query variations. For example, query variation generation process 10 combines and mixes 116 sequences of tokens from queries to create new query variations. In one example, the original query serves as one of the parents for mixing (i.e., crossover), providing tokens for generating new variation queries. Crossover mixes tokens from the original query and other individuals in the subset of query variations to produce offspring with distinct combinations of query elements.

In some implementations, tokenization and weights contribute to the process of combining and mixing sequences of tokens from queries to create new query variations. That is during crossover, segments of tokens from Q tokens (e.g., tokens from query 204) and Q' tokens (e.g., tokens from query variation 308) are mixed 116 to create a new query variation (e.g., query variation 320). The selection of segments for mixing may be influenced by weights defined for particular tokens. For example, each token may have a weight where tokens having higher weights being more likely to contribute to the offspring query.

In one example, suppose the original query (e.g., query 204) is: "What are the terms of use for XYZ software?" and the generated question version is: "What are the system requirements for XYZ software?". In this example, query variation generation process 10 generates a new query variation (e.g., query variation 320) by mixing tokens to result in e.g., "What are the terms and system requirements for XYZ software?". In this example and as a result of mixing tokens (i.e., crossover), query variation generation process 10 generates query variations of the original query from a high-quality set that was created from the fitness function.

In some implementations, generating 108 the plurality of query variation-answer pairs includes mutating 118 randomly selected tokens from the subset of the plurality of candidate tokens to generate the second set of query variations. For example, mutating 118 randomly selected tokens introduces random changes to individual sequences of tokens to maintain diversity and explore new query variations. In one example, the original query (e.g., query 204) is subject to mutation, leading to small alterations or additions in the token sequence. In some implementations, the selection of tokens for mutation may be influenced by their weights with tokens having lower weights being more likely to undergo mutation. This process helps introduce diversity into the population of queries and explore new query variations. Suppose the original query (e.g., query 204) is: "What are the terms of use for XYZ software?". In this example, query variation generation process 10 mutates 118 query 204 by introducing random alterations to generate query variation 320 (e.g., "What are the terms and conditions for XYZ software?") and another query variation (e.g., query variation 322) with other mutations. In some implementations, query variation generation process 10 iterates through continual evolutions of query variations using genetic algorithm 302 until some predefined threshold is determined (e.g., a threshold number of query variations). In this manner, using fitness score 314 and user feedback 226, query variation generation process 10 is able to optimize query variations for the most effective queries to retrieve relevant content portions from RAG system 208.

In some implementations, query variation generation process 10 generates 108 a query variation-answer pair (e.g., query variation-answer pair 324) by processing query variation 320 and content portions 312 to define a prompt for generative AI model 206 and processing the prompt with generative AI model 206 to generate answer 326. In this manner, query variation generation process 10 generates a query variation-answer pair for each query variation of second set of query variations 316. In some implementations, query variation generation process 10 stores 120 query variation-answer pair 324 in a semantic cache (e.g., semantic cache 328) for processing subsequent queries. For example, semantic cache 328 stores previously seen queries and their answers so that the next time a user asks a similar question, a QA system can directly retrieve the answer from semantic cache 328, therefore bypassing expensive (i.e., in time and in cost) application programming interface (API) calls (oftentimes proprietary) to generative AI model 206. As API calls are processed and completed on the scale of seconds (and even longer for queries with many tokens), the response time requirements are much more lenient than in traditional CPU cache systems. This means that simple software-based vector databases can be used to implement semantic caches (as opposed to CPU caches that require specialized chip design).

The main difference with a traditional cache system is that semantic cache hits no longer require exact matches but instead rely on a similarity threshold. When a new query is processed, it is first checked by semantic cache 328 for the existence of highly similar questions already present. If there are such questions, semantic cache 328 can directly return the answers to these questions instead of invoking new API calls to generative AI model 206, thereby accelerating the response time and reducing the costs.

In some implementations, query variation generation process 10 processes 122 a subsequent query and provides 124 an answer to the subsequent query from a semantic cache using a query variation-answer pair from the plurality of query variation-answer pairs. For example, suppose a user (e.g., user 200) provides a subsequent query (e.g., subsequent query 330) for processing with generative AI model 206. As discussed above, query variation generation process 10 first checks semantic cache 328 for a relevant answer by comparing subsequent query 330 to existing query variations in semantic cache 328. In response to determining a sufficiently similar query (e.g., at least a threshold amount of similarity between subsequent query 330 and query variation 320), query variation generation process 10 provides 124 answer 326 to the requesting user. In this manner, query variation generation process 10 uses answer 326 from semantic cache 328 without invoking an API call with generative AI model 206.

In some implementations, query variation generation process 10 trains 126 the RAG system using the plurality of query variation-answer pairs. For example, query variation generation process 10 uses query variation-answer pair 324 to train 126 RAG system 208 to provide content portions 312. As discussed above, RAG system 208 is trained 126 to retrieve content portions based upon a query such that an answer is generated by generative AI model 206 using the query and the content portions retrieved. As such, the accuracy of the answer from the generative AI model is dependent upon the degree to which relevant content portions are retrieved for a query. As such, with query variation-answer pairs (e.g., query variation-answer pair 324) generated using genetic algorithm 302 and user feedback 226, the query variation-answer pairs provide high quality training examples without invoking expensive graphical processing unit (GPU) resources of the generative AI model.

## *System Overview:*

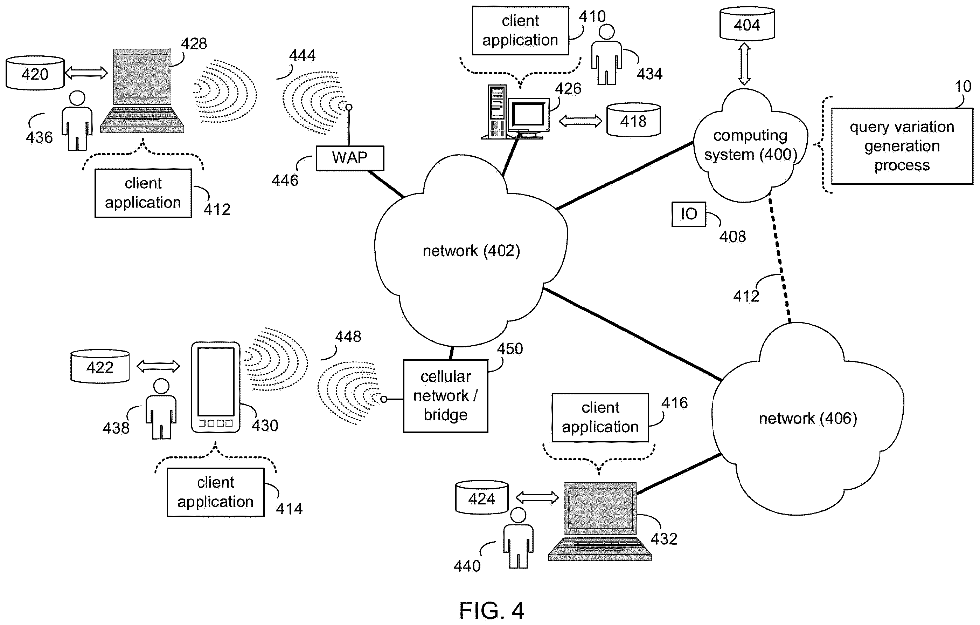

Referring to FIG. 4, a query variation generation process 10 is shown to reside on and is executed by computing system 400, which is connected to network 402 (e.g., the Internet or a local area network). Examples of computing system 400 include: a Network Attached Storage (NAS) system, a Storage Area Network (SAN), a personal computer with a memory system, a server computer with a memory system, and a cloud-based device with a memory system. A SAN includes one or more of a personal computer, a server computer, a series of server computers, a minicomputer, a mainframe computer, a RAID device, and a NAS system.

The various components of computing system 400 execute one or more operating systems, examples of which include: Microsoft® Windows®; Mac® OS X®; Red Hat® Linux®, Windows® Mobile, Chrome OS, Blackberry OS, Fire OS, or a custom operating system (Microsoft and Windows are registered trademarks of Microsoft Corporation in the United States, other countries or both; Mac and OS X are registered trademarks of Apple Inc. in the United States, other countries or both; Red Hat is a registered trademark of Red Hat Corporation in the United States, other countries or both; and Linux is a registered trademark of Linus Torvalds in the United States, other countries or both).

The instruction sets and subroutines of query variation generation process 10, which are stored on storage device 404 included within computing system 400, are executed by one or more processors (not shown) and one or more memory architectures (not shown) included within computing system 400. Storage device 404 may include: a hard disk drive; an optical drive; a RAID device; a random-access memory (RAM); a read-only memory (ROM); and all forms of flash memory storage devices. Additionally or alternatively, some portions of the instruction sets and subroutines of query variation generation process 10 are stored on storage devices (and/or executed by processors and memory architectures) that are external to computing system 400.

In some implementations, network 402 is connected to one or more secondary networks (e.g., network 406), examples of which include: a local area network; a wide area network; or an intranet.

Various input / output (IO) requests (e.g., IO request 408) are sent from client applications 410, 412, 414, 416 to computing system 400. Examples of IO request 408 include data write requests (e.g., a request that content be written to computing system 400) and data read requests (e.g., a request that content be read from computing system 400).

The instruction sets and subroutines of client applications 410, 412, 414, 416, which may be stored on storage devices 418, 420, 422, 424 (respectively) coupled to client electronic devices 426, 428, 430, 432 (respectively), may be executed by one or more processors (not shown) and one or more memory architectures (not shown) incorporated into client electronic devices 426, 428, 430, 432 (respectively). Storage devices 418, 420, 422, 424 may include: hard disk drives; tape drives; optical drives; RAID devices; random access memories (RAM); read-only memories (ROM), and all forms of flash memory storage devices. Examples of client electronic devices 426, 428, 430, 432 include personal computer 426, laptop computer 428, smartphone 430, laptop computer 432, a server (not shown), a data-enabled, and a dedicated network device (not shown). Client electronic devices 426, 428, 430, 432 each execute an operating system.

Users 434, 436, 438, 440 may access computing system 400 directly through network 402 or through secondary network 406. Further, computing system 400 may be connected to network 402 through secondary network 406, as illustrated with link line 442.

The various client electronic devices may be directly or indirectly coupled to network 402 (or network 406). For example, personal computer 426 is shown directly coupled to network 402 via a hardwired network connection. Further, laptop computer 432 is shown directly coupled to network 406 via a hardwired network connection. Laptop computer 428 is shown wirelessly coupled to network 402 via wireless communication channel 444 established between laptop computer 428 and wireless access point (e.g., WAP) 446, which is shown directly coupled to network 402. WAP 446 may be, for example, an IEEE 802.11a, 802.11b, 802.11g, 802.11n, Wi-Fi®, and/or Bluetooth® device that is capable of establishing a wireless communication channel 444 between laptop computer 428 and WAP 446. Smartphone 430 is shown wirelessly coupled to network 402 via wireless communication channel 448 established between smartphone 430 and cellular network / bridge 450, which is shown directly coupled to network 402.

*General:*

As will be appreciated by one skilled in the art, the present disclosure may be embodied as a method, a system, or a computer program product. Accordingly, the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present disclosure may take the form of a computer program product on a computer-usable storage medium having computer-usable program code embodied in the medium.

Any suitable computer usable or computer readable medium may be used. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium may include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. The computer-usable or computer-readable medium may also be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this A, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to the Internet, wireline, optical fiber cable, RF, etc.

Computer program code for carrying out operations of the present disclosure may be written in an object-oriented programming language. However, the computer program code for carrying out operations of the present disclosure may also be written in conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through a local area network / a wide area network / the Internet.

The present disclosure is described with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, may be implemented by computer program instructions. These computer program instructions may be provided to a processor of a general-purpose computer / special purpose computer / other programmable data processing apparatus, such that the instructions, which execute via the processor of the computer or other programmable data processing apparatus, create means for implementing the functions/acts specified in the flowchart and/or block diagram block or blocks.

These computer program instructions may also be stored in a computer-readable memory that may direct a computer or other programmable data processing apparatus to function in a particular manner, such that the instructions stored in the computer-readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

The flowcharts and block diagrams in the figures may illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, not at all, or in any combination with any other flowcharts depending upon the functionality involved. It will also be noted that each block of the block diagrams and/or flowchart illustrations, and combinations of blocks in the block diagrams and/or flowchart illustrations, may be implemented by special purpose hardware-based systems that perform the specified functions or acts, or combinations of special purpose hardware and computer instructions.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

A number of implementations have been described. Having thus described the disclosure of the present application in detail and by reference to embodiments thereof, it will be apparent that modifications and variations are possible without departing from the scope of the disclosure defined in the appended claims.

**Claims**

1. A computer-implemented method, executed on a computing device, comprising:

   processing a plurality of query-answer pairs associated with a generative artificial intelligence (AI) model;
   generating a first set of query variations from the plurality of query-answer pairs using a genetic algorithm;
   identifying a plurality of content portions associated with the first set of query variations using a Retrieval Augmentation Generation (RAG) system;
   determining a fitness score associated with each of the query variations of the first set of query variations using the plurality of content portions; and
   generating a plurality of query variation-answer pairs by generating a second set of query variations from the first set of query variations using the genetic algorithm and the fitness scores associated with each of the first set of query variations.

2. The computer-implemented method of claim 1, at least one of:
   further comprising:

   processing a subsequent query; and
   providing an answer to the subsequent query from a semantic cache using a query variation-answer pair from the plurality of query variation-answer pairs;

further comprising:

training the RAG system using the plurality of query variation-answer pairs; and
wherein generating the first set of query variations includes tokenizing a plurality of queries from the plurality of query-answer pairs into a plurality of tokens.

3. The computer-implemented method of claim 1 or 2, wherein generating the plurality of query variation-answer pairs includes selecting a subset of the first set of query variations using the fitness score associated with each of the query variations of the first set of query variations.

4. The computer-implemented method of claim 3, at least one of:

wherein generating the plurality of query variation-answer pairs includes mixing tokens from the subset of the plurality of candidate tokens to generate the second set of query variations; and
wherein generating the plurality of query variation-answer pairs includes mutating randomly selected tokens from the subset of the plurality of candidate tokens to generate the second set of query variations.

5. The computer-implemented method of one of claims 1 to 4, further comprising:
processing user feedback associated with the query-answer pairs.

6. A computing system comprising:

a memory; and
a processor configured to:

process a plurality of query-answer pairs associated with a generative artificial intelligence (AI) model;
generate a first set of query variations from the plurality of query-answer pairs using a genetic algorithm;
identify a plurality of content portions associated with the first set of query variations using a Retrieval Augmentation Generation (RAG) system;
determine a fitness score associated with each of the query variations of the first set of query variations using the plurality of content portions; and
generate a plurality of query variation-answer pairs by generating a second set of query variations from the first set of query variations using the genetic algorithm and the fitness scores associated with each of the first set of query variations;
store the plurality of query variation-answer pairs in a semantic cache;
process a subsequent query; and
provide an answer to the subsequent query from the semantic cache using a query variation-answer pair from the plurality of query variation-answer pairs.

7. The computing system of claim 6, wherein generating the plurality of query variations includes tokenizing a plurality of queries from the plurality of query-answer pairs into a plurality of tokens.

8. The computing system of claim 6 or 7, wherein generating the first set of query variations includes tokenizing a plurality of queries from the plurality of query-answer pairs into a plurality of tokens.

9. The computing system of claim 8, wherein generating the plurality of query variation-answer pairs includes mixing tokens from the subset of the plurality of candidate tokens to generate the second set of query variations.

10. The computing system of claim 9, wherein generating the plurality of query variation-answer pairs includes mutating randomly selected tokens from the subset of the plurality of candidate tokens to generate the second set of query variations.

11. The computing system of one of claims 6 to 10, wherein the processor is further configured to:
process user feedback associated with the query-answer pairs.

12. A computer program product residing on a non-transitory computer readable medium having a plurality of instructions stored thereon which, when executed by a processor, cause the processor to perform operations comprising:

processing a plurality of query-answer pairs associated with a generative artificial intelligence (AI) model;
processing user feedback associated with the query-answer pairs;
generating a first set of query variations from the plurality of query-answer pairs using a genetic algorithm;
identifying a plurality of content portions associated with the first set of query variations using a Retrieval Augmentation Generation (RAG) system;
determining a fitness score associated with each of the query variations of the first set of query variations using the plurality of content portions and the user feedback associated with the query-answer pairs; and
generating a plurality of query variation-answer pairs by generating a second set of query variations from the first set of query variations using the genetic algorithm and the fitness scores associated with each of the first set of query variations.

13. The computer program product of claim 12, at least one of:

wherein generating the plurality of query variations includes tokenizing a plurality of queries from the plurality of query-answer pairs into a plurality of tokens; and
wherein the operations further comprise:
training the RAG system using the plurality of query variation-answer pairs.

14. The computer program product of claim 12 or 13, wherein generating the first set of query variations includes tokenizing a plurality of queries from the plurality of query-answer pairs into a plurality of tokens.

15. The computer program product of claim 14, wherein generating the plurality of query variation-answer pairs includes mixing tokens from the subset of the plurality of candidate tokens to generate the second set of query variations, wherein preferably generating the plurality of query variation-answer pairs includes mutating randomly selected tokens from the subset of the plurality of candidate tokens to generate the second set of query variations.

10

processing a plurality of query-answer pairs associated with a generative artificial intelligence (AI) model

100

generating a first set of query variations from the plurality of query-answer pairs using a genetic algorithm

102

identifying a plurality of content portions associated with the first set of query variations using a Retrieval Augmentation Generation (RAG) system

104

determining a fitness score associated with each of the query variations of the first set of query variations using the plurality of content portions

106

generating a plurality of query variation-answer pairs by generating a second set of query variations from the first set of query variations using the genetic algorithm and the fitness scores associated with each of the first set of query variations

108

storing the plurality of query variation-answer pairs in a semantic cache

120

processing a subsequent query

122

providing an answer to the subsequent query from the semantic cache

124

training the RAG system using the plurality of query variation-answer pairs

126

tokenizing a plurality of queries from the plurality of query-answer pairs into a plurality of tokens

110

processing user feedback associated with the query-answer pairs

112

selecting a subset of the first set of query variations using the fitness score associated with each of the query variations of the first set of query variations

114

mixing tokens from the subset of the plurality of candidate tokens to generate the second set of query variations

116

mutating randomly selected tokens from the subset of the plurality of candidate tokens to generate the second set of query variations

118

FIG. 1

13

FIG. 2

FIG. 3

EP 4 672 027 A1

FIG. 4

EP 4 672 027 A1

Europäisches
Patentamt

European
Patent Office

Office européen
des brevets

# EUROPEAN SEARCH REPORT

**Application Number**

EP 25 18 5168

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/015321 A1 (PRYON INCORPORATED [US]) 18 January 2024 (2024-01-18) * paragraphs [0022], [0097], [0119] * ----- | 1-15 | INV. G06F16/3329 |
| A | FU BANG ET AL: "GPTCache: An Open-Source Semantic Cache for LLM Applications Enabling Faster Answers and Cost Savings", PROCEEDINGS OF THE 3RD WORKSHOP FOR NATURAL LANGUAGE PROCESSING OPEN SOURCE SOFTWARE (NLP-OSS 2023), [Online] 6 December 2023 (2023-12-06), pages 212-218, XP093310108, Singapore Retrieved from the Internet: URL:https://aclanthology.org/2023.nlposs-1.24.pdf> [retrieved on 2025-09-01] * abstract * ----- | 2,6 | |

**TECHNICAL FIELDS SEARCHED (IPC)**

G06F

The present search report has been drawn up for all claims

| Place of search | Date of completion of the search | Examiner |
|---|---|---|
| The Hague | 1 September 2025 | Rameseder, Jonathan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 5168

This annex lists the patent family members relating to the patent documents cited in the above-mentioned European search report.
The members are as contained in the European Patent Office EDP file on
The European Patent Office is in no way liable for these particulars which are merely given for the purpose of information.

01-09-2025

| Patent document cited in search report | Publication date | Patent family member(s) | | Publication date |
|---|---|---|---|---|
| WO 2024015321 A1 | 18-01-2024 | EP | 4555426 A1 | 21-05-2025 |
| | | JP | 2025525511 A | 05-08-2025 |
| | | KR | 20250037488 A | 17-03-2025 |
| | | US | 2024241880 A1 | 18-07-2024 |
| | | US | 2024249545 A1 | 25-07-2024 |
| | | US | 2024265041 A1 | 08-08-2024 |
| | | WO | 2024015319 A1 | 18-01-2024 |
| | | WO | 2024015320 A1 | 18-01-2024 |
| | | WO | 2024015321 A1 | 18-01-2024 |
| | | WO | 2024015323 A1 | 18-01-2024 |

EPO FORM P0459

For more details about this annex : see Official Journal of the European Patent Office, No. 12/82